# EUROPEAN PATENT APPLICATION

(11) **EP 1 482 700 A1**
(43) Date of publication of application: **01.12.2004**
(21) Application number: 02702783.8
(22) Date of filing: 07.03.2002
(51) Int. Cl.: H04L 29/06, H04L 1/16

(54) **PACKET TRANSMITTER AND PACKET TRANSMISSION METHOD**

(71) Applicant: MATSUSHITA ELECTRIC INDUSTRIAL CO., LTD., Kadoma-shi, Osaka 571-8501 (JP)
(72) Inventor: IDO, Daiji, Yokohama-shi, Kanagawa 236-0005 (JP); IMURA, Koji, Machida-shi, Tokyo 194-0013 (JP); MIYAZAKI, Akihiro, Sakai-shi, Osaka 591-8032 (JP); HATA, Koichi, Katano-shi, Osaka 576-0021 (JP)
(74) Representative: Grünecker, Kinkeldey, Stockmair & Schwanhäusser Anwaltssozietät
(86) International application number: PCT/JP2002/002104
(87) International publication number: WO 2003/075538

(57) **Abstract**

When an update request signal is output from update request signal receiver 108 to compression scheme selector 201, compression scheme selector 201 selects UPDATE_FULLHEADER. However, compression method selector 201, within an RTT after selecting an UPDATE_FULLHEADER, does not select an UPDATE_FULLHEADER again. That is, within an RTT after transmitting an UPDATE_FULLHEADER a packet transmitting apparatus does not transmit an UPDATE_FULLHEADER even upon receiving an update request signal, and selects NON_UPDATE or UPDATE as usual.

## Description

### Technical Field

The present invention relates to a packet transmitting apparatus and a packet transmission method. More particularly, the present invention relates to a packet transmitting apparatus and a packet transmission method for use in a packet communication system in which header compression and decompression are performed using reference information.

### Background Art

Presently, the typical protocols (communication rules) used to transmit packets on the Internet include RTP (Real-time Transport Protocol), UDP (User Data Protocol), and IP (Internet Protocol). In packet transmission, these protocols are usually used in combination. Besides, these protocols are standardized by the IETF (Internet Engineering Task Force).

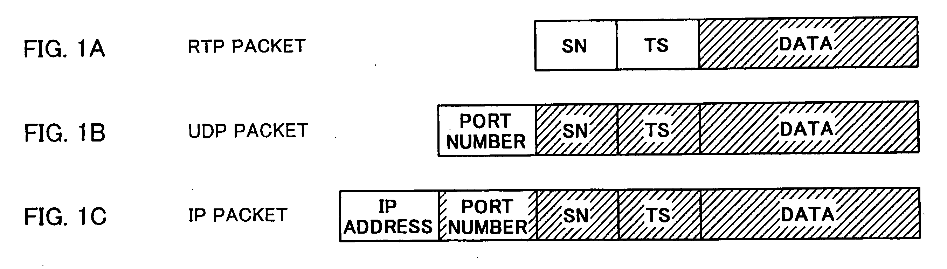

In each of the above protocols, information such as described below is appended to transmission data as a header, to generate a packet. That is, according to RTP, as shown in FIG.1A, a sequence number (hereinafter "SN"), which denotes the order of data, and a time stamp (hereinafter "TS"), which is time information, are appended to data to generate an RTP packet. Next, according to UDP, as shown in FIG.1B, a port number of the receiving end is appended to an RTP packet, to generate a UDP packet. Furthermore, according to IP, as shown in FIG.1C, an address of the receiving end on the Internet (IP address) is appended to a UDP packet, to generate an IP packet. Then, this IP packet is transmitted to the receiving end.

Header compression technology is a technology for improving packet transmission efficiency by compressing the headers and performing transmission. The compression methods for the respective headers appended in RTP, UDP, and IP are stipulated in RFC (Request for Comments) 2508 by the IETF. The header compression methods stipulated in RFC2508 are principally for wired packet transmission including the Internet.

In contrast to this, one header compression method presently proposed by the IETF for wireless packet transmission such as in a cellular phone network is ROHC (Robust Header Compression) . The rate of error occurrence tends to be higher in a wireless zone than in a wired zone. The ROHC header compression method features high tolerance for errors that occur during transmission.

Moreover, considering that because the bandwidth that a wireless zone can make use of is narrower than that of a wired zone, ROHC sets higher header compression rates than the compression methods stipulated in RFC2508. Incidentally, ROHC is standardized by the IETF in RFC 3095.

To be more specific, ROHC compresses the headers as follows. That is, an uncompressed header containing an IP address and a port number and the like is transmitted not every time but only at predetermined intervals. If a certain regularity appears between increase in the SN and increase in the TS, the SN alone is transmitted. Moreover, as for the SN, only some bits of the lower bits are transmitted, and the entire bits are transmitted only when a carry occurs. At the transmitting end header compression is performed with reference to reference information called context, and, at the receiving end header decompression is performed with reference to the same context used at the transmitting end.

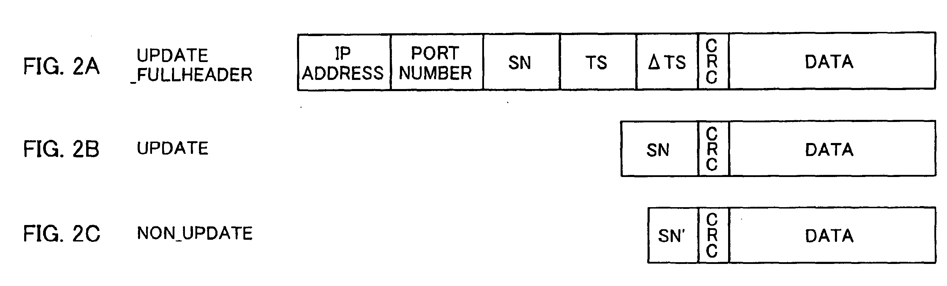

Furthermore, in ROHC, there are three types of headers as shown in FIG.2A-2C, referred to as UPDATE_FULLHEADER, UPDATE, and NON_UPDATE, respectively. UPDATE_FULLHEADER shown in FIG.2A contains, besides an SN and a CRC (Cyclic Redundancy Check) bit for checking when the receiving end decompresses the header whether the decompression has been successful, an IP address, a port number, a TS, and a ΔTS, which is increase in the TS in correspondence to increase in the SN, and thus makes an uncompressed header. This UPDATE_FULLHEADER is transmitted at regular intervals or every time a change occurs in ΔTS. UPDATE shown in FIG.2B does not contain an IP address, a port number, a TS, and a ΔTS, but contains an SN and a CRC bit. Furthermore, NON_UPDATE shown in FIG.2C does not contain an IP address, a port number, a TS and a ΔTS, but contains an SN' represented with only some bits of the lower bits of an SN, and a CRC bit.

The receiving end changes to update or not to update the context for every UPDATE_FULLHEADER, UPDATE, and NON_UPDATE. That is, at the receiving end, when an UPDATE_FULLHEADER is received, the context is updated with the content of the received header as it is. When an UPDATE is received, the header is decompressed with reference to the context, and thereafter the context is updated with the content of the decompressed header. Moreover, when a NON-UPDATE is received, though the header is decompressed with reference to the context, the context is not updated.

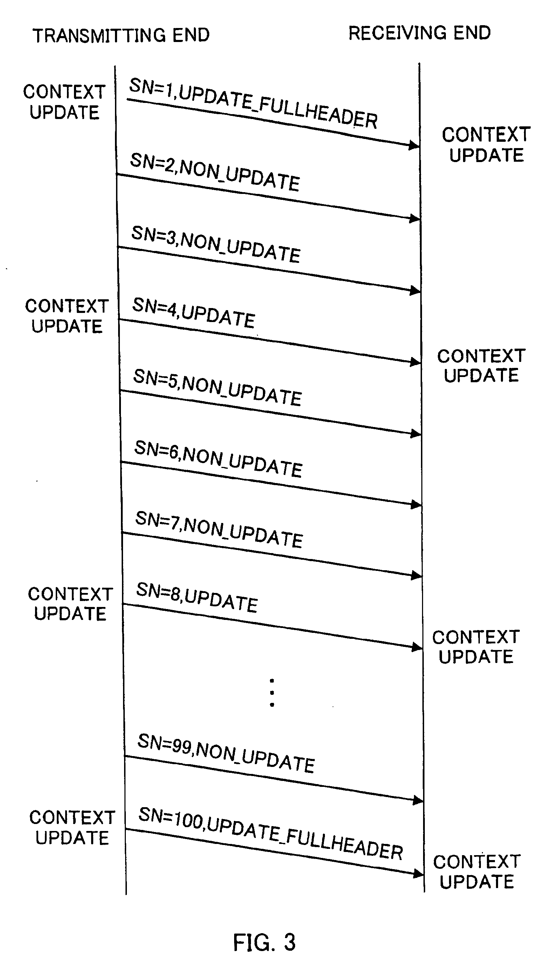

An example of the steps of packet transmission/reception using ROHC will be described next with a sequence diagram. FIG.3 is a sequence diagram illustrating conventional steps of packet transmission/reception using ROHC.

Referring to FIG.3, the transmitting end (that is, the header compressing end) transmits an UPDATE_FULLHEADER of SN=1 upon the first transmission after communication starts. At the transmitting end, the context is updated when the UPDATE_FULLHEADER is transmitted. Similarly, at the receiving end (that is, the header decompressing end), the context is updated when the UPDATE_FULLHEADER is received. By this means, the context of the transmitting end and the context of the receiving end match.

Upon the transmission of SN=2 and SN=3, the transmitting end generates and transmits a NON_UPDATE with reference to the context updated with the UPDATE_FULLHEADER of SN=1. Based on a comparison result between the SN that is transmitted and the SN of the context, the transmitting end determines that a carry did not occur in the SN, and transmits the NON_UPDATE. Upon the reception of SN=2 and SN=3, the receiving end decompresses the headers with reference to the context updated with the UPDATE_FULLHEADER of SN=1.

Upon the transmission of SN=4, the transmitting end generates and transmits an UPDATE with reference to the context updated with the UPDATE_FULLHEADER of SN=1. Based on a comparison result between the SN that is transmitted and the SN of the context, the transmitting end determines that a carry occurred in the SN, and transmits the UPDATE. Upon transmitting the UPDATE the transmitting end updates the context. Upon the reception of SN=4, the receiving end decompresses the header with reference to the context updated with the UPDATE_FULLHEADER of SN=1 and thereafter updates the context with the content of the decompressed header. By this means, the context at the transmitting end and the context at the receiving end match.

Incidentally, a carry here refers to a mismatch between the most significant bit of the SN of context and the most significant bit of the SN of a packet, provided that the SN' s are expressed in binary of a predetermined number of bits. For instance, referring to SN=1-SN=4 shown in FIG.3, if an SN is expressed in 3 bits and an SN' is expressed in 2 bits, upon change from SN=3 to SN=4, "011" becomes "100," and a carry thus occurs. Thereupon SN' changes from "11" to "00," which makes it difficult to judge whether the SNbefore compression was "100" or "000." For this reason, every time a carry occurs, an UPDATE is transmitted to update the context.

In SN=5-SN=99, the same above steps are repeated. Upon the transmission of SN=100, the transmitting end transmits an UPDATE_FULLHEADER. That is, in this example, an UPDATE_FULLHEADER is transmitted once in every 100 times.

Upon receiving the UPDATE_FULLHEADER, the receiving end, without reference to the context, updates the context with the content of the received header as it is, and by thus transmitting the UPDATE_FULLHEADER on a regular basis, it is possible to prevent the receiving end from making reference to faulty context and decompressing faulty headers.

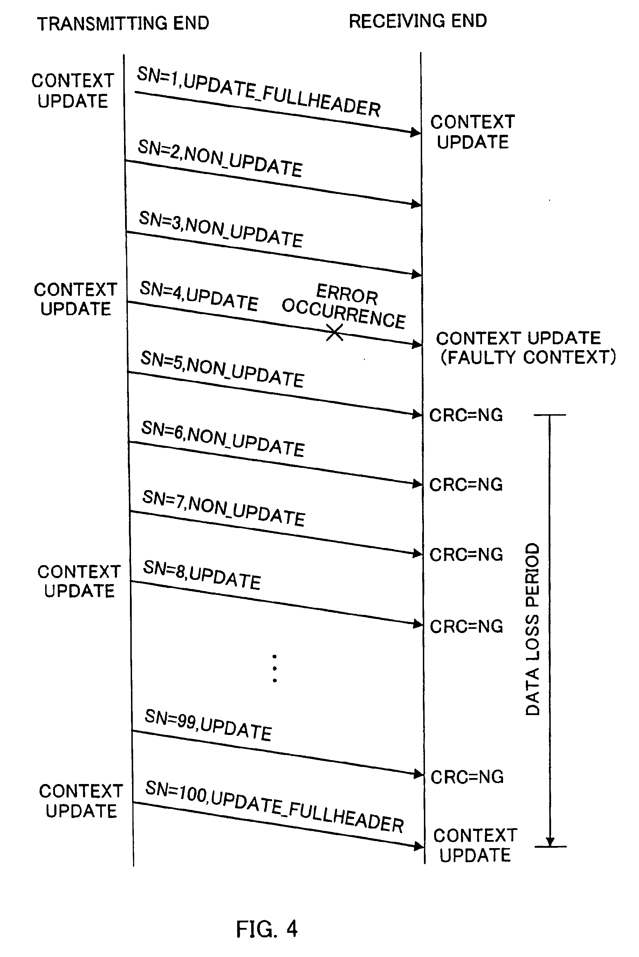

By the way, packets that are transmitted are each appended with a CRC bit as shown in FIG.2A-2C, so that, after the headers are decompressed, the receiving end is able to detect errors in the decompressed headers and discard the packets with errors. Still, when an error beyond error detection capacity occurs, there may be cases where CRC fails to detect the error. For instance, as shown in FIG.4, when an error occurs during the transmission of the UPDATE of SN=4 and the receiving end is incapable of detecting the error, the context is updated with the faulty header. In this way, the context updated with the header of SN=4 becomes a faulty context. In SN=5-SN=99, the receiving end decompresses the headers with reference to this faulty context, so the headers of SN=5-SN=99 become all faulty (that is, CRC=NG) and the packets of SN=5-SN=99 are all discarded. That is, this results in a situation at the receiving end where the data of SN=5-SN=99 is lost.

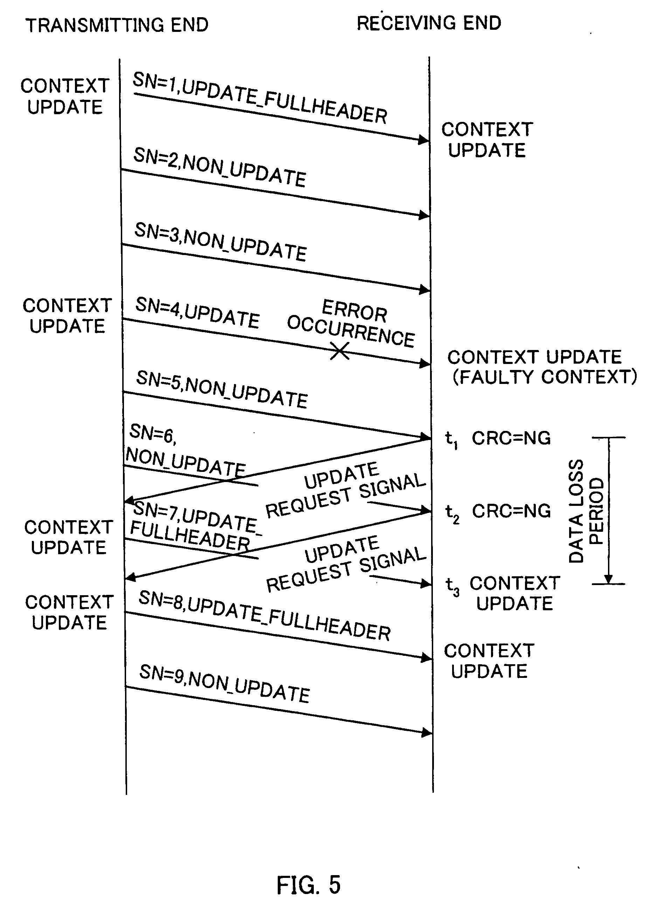

So, as shown in FIG.5, it is possible to employ the steps whereby, when an error is detected in a header (that is, when CRC=NG), the receiving end makes a request for a context update to the transmitting end, and the transmitting end transmits an UPDATE_FULLHEADER in response to the update request. By employing the above steps, the context at the receiving end is updated to a correct context with the UPDATE_FULLHEADER of SN=7, so that the period in which data is lost can be shortened.

However, it takes a little while until the receiving end receives the UPDATE_FULLHEADER after issuing the update request. If during this time the receiving end receives a NON_UPDATE or an UPDATE, the receiving end issues an update request again. In response to this update request, the transmitting end transmits an UPDATE_FULLHEADER again.

In the example shown in FIG. 5, the UPDATE_FULLHEADER in response to the update request issued at time t1 is received at the receiving end at time t3. At the receiving end, a NON_UPDATE of SN=6 is received during time t1-t3, and an update request is issued again at time t2. In response to this update request issued again, the transmitting end transmits an UPDATE_FULLHEADER of SN=8 following an UPDATE_FULLHEADER of SN=7.

In this case, SN=8 does not need to be an UPDATE_FULLHEADER. That is, the context at the receiving end has been updated correctly with UPDATE_FULLHEADER of SN=7, so that for the packet of SN=8, an UPDATE or a NON_UPDATE is sufficient.

An UPDATE_FULLHEADER carries a larger amount of data in the header field than an UPDATE or a NON_UPDATE. So, employing the steps such as shown in FIG.5 reduces header compression efficiency. In other words, packet transmission efficiency decreases.

### Disclosure of Invention

It is therefore an object of the present invention to provide a packet transmitting apparatus and a packet transmission method that shorten the period in which data is lost at the receiving end without reducing header compression efficiency and packet transmission efficiency.

To achieve the above object, the present invention is configured to ignore an update request received during a round trip time (Round Trip Time: hereinafter "RTT") after a packet with a header that is decompressed without reference to an context and thereafter used for an context update (that is, an UPDATE_FULLHEADER packet) is transmitted, until an update request that is issued when the packet's header contains an error is received, thereby avoiding transmitting the same type of packets as the above packet during the round trip time.

### Brief Description of Drawings

FIG.1A is a frame format showing a configuration of an RTP packet;
FIG.1B is a frame format showing a configuration of a UDP packet;
FIG.1C is a frame format showing a configuration of an IP packet;
FIG.2A is a frame format showing a configuration of an UPDATE_FULLHEADER;
FIG.2B is a frame format showing a configuration of an UPDATE;
FIG.2C is a frame format showing a configuration of a NON_UPDATE;
FIG.3 is a sequence diagram illustrating conventional steps of packet communication using ROHC;
FIG.4 is a sequence diagram illustrating conventional steps of packet communication using ROHC;
FIG.5 is a sequence diagram illustrating an example of the steps employed when a context is updated faultily;
FIG.6 is a block diagram showing a configuration of a packet transmitting apparatus according to an embodiment of the present invention;
FIG.7 is a block diagram showing a configuration of a transmission packet generator in a packet transmitting apparatus according to an embodiment of the present invention;
FIG.8 is a block diagram showing a showing a configuration of a packet receiving apparatus that performs packet communication according to an embodiment of the present invention; and
FIG.9 is a sequence diagram illustrating the steps of transmission/reception in packet transmission performed between a packet transmitting apparatus according to an embodiment of the present invention and a packet receiving apparatus according to an embodiment of the present invention.

### Best Mode for Carrying Out the Invention

Hereinafter, a preferred embodiment of the present invention will be concretely described with reference to the drawings.

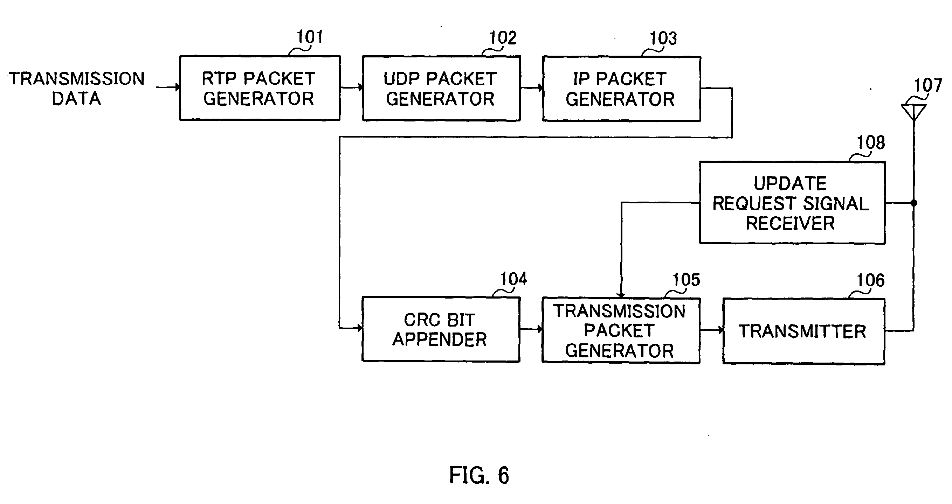

FIG.6 is a block diagram showing a configuration of a packet transmitting apparatus according to the embodiment of the present invention. A case will be described here where packets are transmitted through wireless channels.

Referring to the packet transmitting apparatus of FIG. 6, RTP packet generator 101 divides transmission data into predetermined transmission units and thereafter appends an SN and a TS to the divided data, and thus generates an RTP packet. Then, RTP packet generator 101 outputs the RTP packet to UDP packet generator 102.

UDP packet generator 102 generates an UDP packet by appending a port number of the receiving end to the RTP packet, and outputs this UDP packet to IP packet generator 103.

IP packet generator 103 appends an address (IP address) of the receiving end on the Internet to the UDP packet and generates an IP packet, and outputs the IP packet to CRC bit appender 104.

CRC bit appender 104 appends a CRC bit to the IP packet, and outputs the packet to transmission packet generator 105.

Transmission packet generator 105 compresses the header. Then, transmission packet generator 105 outputs the packet appended with the compressed header to transmitter 106 as a transmission packet. The configuration of transmission packet generator 105 will be described later.

Transmitter 106 executes modulation processing and wireless processing (including D/A conversion and up-conversion) of the transmission packet and thereafter transmits the transmission packet to a packet receiving apparatus through antenna 107.

Update request signal receiver 108 executes wireless processing (including down conversion and A/D conversion) and demodulation processing of the update request signal received through antenna 107, and thereafter outputs the update request signal to transmission packet generator 105.

The update request signal here refers to a signal whereby the packet receiving apparatus requests a context update to the packet transmitting apparatus. That is, an update request signal is a signal whereby the packet receiving apparatus requests the packet transmitting apparatus to transmit an UPDATE_FULLHEADER.

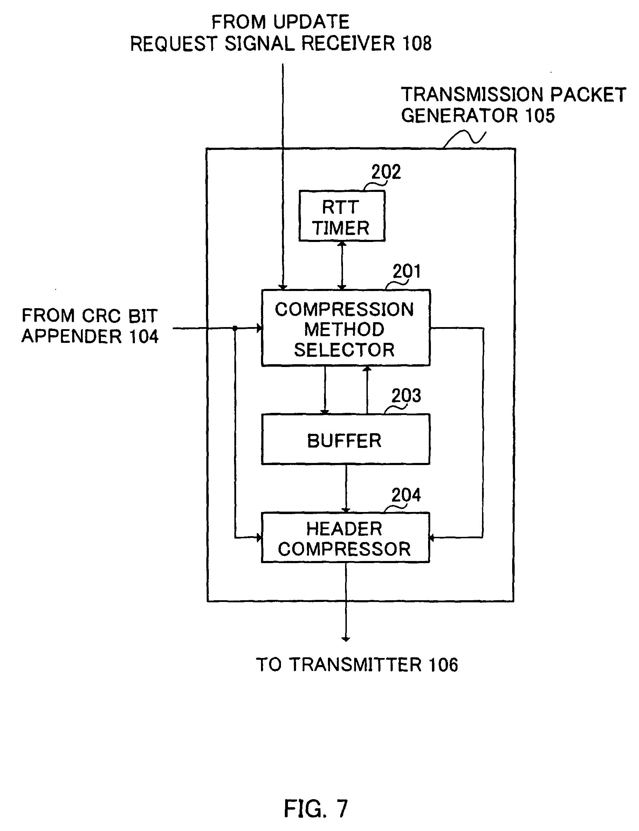

Next, the configuration of transmission packet generator 105 will be explained. FIG.7 is a block diagram showing the configuration of a transmission packet generator of the packet transmitting apparatus according to the embodiment of the present invention.

Referring to transmission packet generator 105 shown in FIG.7, a packet appended with a header and a CRC bit is input from CRC bit appender 104 to compression method selector 201 and header compressor 204.

Compression method selector 201 selects the header compression method, and reports the selected compression method to header compressor 204. That is, compression method selector 201 selects one header from 3 types of headers, namely UPDATE_FULLHEADER, UPDATE, and NON_UPDATE, and reports the selected header type to header compressor 204.

When no update request signal is output from update request signal receiver 108 to compression method selector 201, compression method selector 201 selects one header from UPDATE_FULLHEADER, UPDATE, and NON_UPDATE as follows.

That is, for the first packet transmitted after communication starts, compression method selector 201 selects an UPDATE_FULLHEADER. Thereafter, compression method selector 201 selects an UPDATE_FULLHEADER on a regular basis. For example, compression method selector 201 selects an UPDATE_FULLHEADER once in every 100 times.

Moreover, compression method selector 201 compares the SN of the header and the SN of the context held in buffer 203, selects an UPDATE if a carry occurs in the SN, and selects a NON_UPDATE if a carry does not occur in the SN.

On the other hand, when a update request signal is output from update request signal receiver 108 to compression method selector 201, compression method selector 201 selects an UPDATE_FULLHEADER. However, during an RTT after thus selecting an UPDATE_FULLHEADER, compression method selector 201 does not select an UPDATE_FULLHEADER again. That is, during an RTT after transmitting an UPDATE_FULLHEADER, the packet transmitting apparatus does not transmit an UPDATE_FULLHEADER even upon receiving an update request signal and instead selects a NON_UPDATE or an UPDATE as usual as described above.

Moreover, in either case where an update request signal is or is not output from update request signal generator 108, compression method selector 201, upon selecting an UPDATE_FULLHEADER or an UPDATE, updates the context held in buffer 203 with the header of a packet output from CRC bit appender 104, and does not update the context upon selecting a NON_UPDATE.

RTT timer 202 counts the RTT. An RTT measured in advance is set in RTT timer 202, and when compression method selector 201 selects an UPDATE_FULLHEADER in accordance with an update request signal, the counting of the RTT starts following instructions from compression method selector 201.

Buffer 203 is a buffer for holding context. As described above, the context held in buffer 203 is updated by compression method selector 201 from time to time.

In accordance with the type of the header selected in compression method selector 201, header compressor 204 compresses the header of the packet output from CRC bit appender 104 and outputs the result to transmitter 106. Thereupon header compressor 204 refers to the context held in buffer 203 and compresses the header based on the difference from this context.

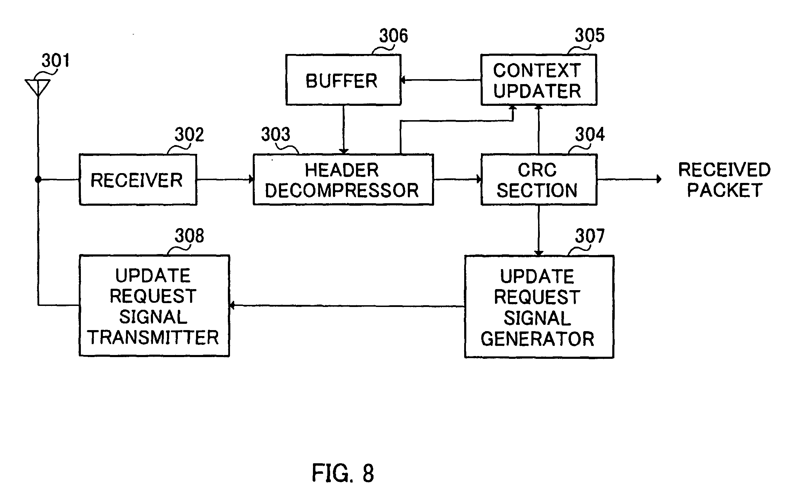

Next, a packet receiving apparatus that performs packet communication with the packet receiving apparatus of the embodiment will be described. FIG.8 is a block diagram showing the configuration of a packet receiving apparatus that performs packet communication with the packet transmitting apparatus according to the embodiment of the present invention.

Referring to FIG.8, receiver 302 executes wireless processing (including down-conversion and A/D conversion) and demodulation processing of a packet received through antenna 301, and thereafter outputs the received packet to header decompressor 303.

Header decompressor 303 decompresses the header of the received packet with reference to a context held in buffer 306, and output the header-decompressed packet to CRC section 304. Moreover, header decompressor 303 reports to context updater 305 the type of the header of the received packet. That is, header decompressor 303 reports to context updater 305 which of UPDATE_FULLHEADER, UPDATE, and NON_UPDATE the header of the received packet is.

CRC section 304 has a CRC of the header of the packet output from header decompressor 303, and outputs the packet after the CRC as the received packet. Moreover, when an error is detected in the header, CRC section 304 reports this to update request signal generator 307 by means of an NG signal. Moreover, when no error is detected in the header, CRC section 304 outputs to context updater 305 the packet output from header decompressor 303.

In accordance with the type of the header of the packet output from CRC section 304, context updater 305 updates the context held in buffer 306. That is, when the type reported from header decompressor 303 is UPDATE_FULLHEADER or UPDATE, context updater 305 updates the context with the header field of the packet output from CRC section 304, and, when the type reported from header decompressor 303 is NON_UPDATE, does not update the context.

Update request signal generator 307 generates an update request signal when an NG signal is output from CRC section 304, and outputs the generated update request signal to update request signal transmitter 308. That is, the packet receiving apparatus transmits an update request signal every time an error is detected in a header.

Update request signal transmitter 308 executes modulation processing and wireless processing (including D/A conversion and up-conversion) of the update request signal and thereafter transmits the update request signal to the packet transmitting apparatus through antenna 301.

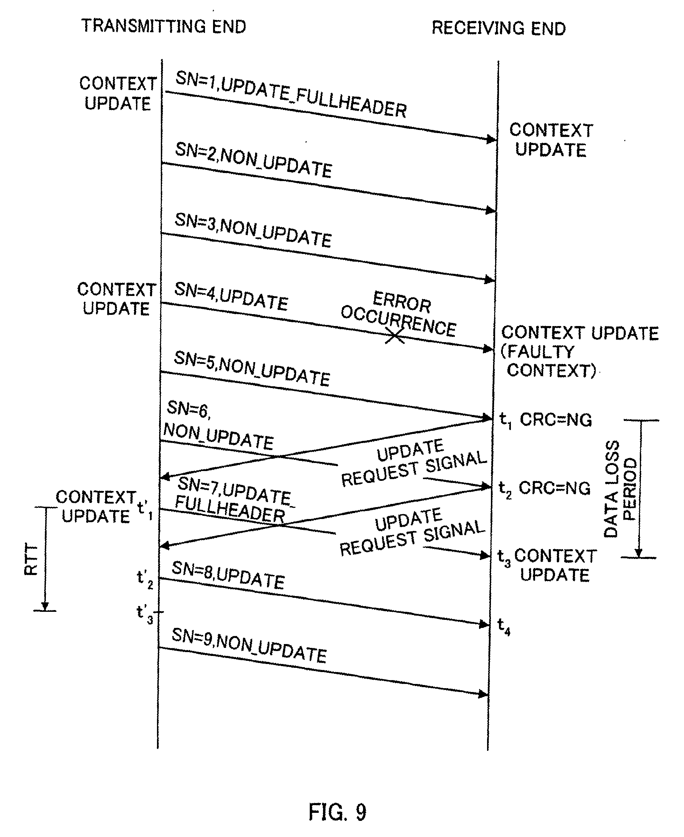

Next, the steps of transmission/reception in packet transmission performed between a packet transmitting apparatus of the above configuration and a packet receiving apparatus of the above configuration will be described in detail with reference to a sequence diagram. FIG.9 is a sequence diagram illustrating the steps of transmission/reception in packet transmission performed between a packet transmitting apparatus according to the embodiment of the present invention and a packet receiving apparatus according to the embodiment of the present invention. Incidentally, in FIG.9, the transmitting end refers to a packet transmitting apparatus of the above configuration and the receiving end refers to a packet receiving apparatus of the above configuration.

Now assume that, as shown in FIG.9, an error occurs during transmission of an UPDATE of SN=4 and the packet receiving apparatus fails to detect this error. That is, assume that the context in the packet receiving apparatus is updated with a faulty header. The context then becomes a faulty context, and the CRC result of the header of the packet of SN=5 and the CRC result of the header of the packet of SN=6 will be both NG. So, as shown in FIG.9, the packet receiving apparatus transmits update request signals for the packet of SN=5 and for the packet of SN=6 at time t1 and time t2, respectively.

In compression method selector 201 shown in FIG.7, the first packet input after the input of the update request signal transmitted at time t1 becomes an UPDATE_FULLHEADER. That is, compression method selector 201 transmits an UPDATE_FULLHEADER as the packet of SN=7 at time t1'. In addition, compression method selector 201 starts RTT timer 202 at time t1'.

The UPDATE_FULLHEADER transmitted at time t1' is received in the packet receiving apparatus at time t3. Consequently, in the packet receiving apparatus, the context is updated at time t3.

If the context is correctly updated in the packet receiving apparatus with the UPDATE_FULLHEADER of SN=7, the packet transmitting apparatus needs not to transmit an UPDATE_FULLHEADER again in response to the update request signal transmitted at time t2, and transmitting an UPDATE or a NON_UPDATE will suffice at time t2'.

Then, after an UPDATE_FULLHEADER is selected at time t1', until time t3' , which is an RTT afterward, compression method selector 201 does not select an UPDATE_FULLHEADER again even upon receiving an update request signal, and instead selects a NON_UPDATE or an UPDATE as usual as described above.

Consequently, in the example of FIG.9, in response to the update request signal transmitted at time t2, compression method selector 201 selects an UPDATE at time t2' as usual. By this means, it is possible to avoid transmitting unnecessary UPDATE_FULLHEADER's. In other words, it is possible to prevent a decrease in header compression efficiency and packet transmission efficiency.

Incidentally, the packet transmitting apparatus does not transmit an UPDATE_FULLHEADER again during the period of an RTT for the following reason.

If the context is correct at time t3 by virtue of UPDATE_FULLHEADER of SN=7, the packets after SN=8 need not be UPDATE_FULLHEADER's.

However, if an error is detected in the header of the packet of SN=7 and the packet of SN=7 is discarded accordingly, the context in the packet receiving apparatus will remain faulty. Moreover, given the error in the header of the packet of SN=7, the packet receiving apparatus issues an update request signal at time t3. This update request is received in the packet transmitting apparatus at time t3', which is an RTT after time t1'. Consequently, when the UPDATE_FULLHEADER of SN=7 is discarded in the packet receiving apparatus, compression method selector 201 needs to select an UPDATE_FULLHEADER again at time t3', which is an RTT after t1'.

In view of the above reason, the packet transmitting apparatus does not transmit an UPDATE_FULLHEADER again during the period of an RTT.

Although the above embodiment adopts a configuration in which the RTT is set in advance in RTT timer 202, it is equally possible not to provide RTT timer 202 and instead report the RTT, measured in an RTP layer, to compression method selector 201 from the RTP layer. The specifics of the method of RTT measurement is stipulated by the IETF in RFC1889.

Thus according to the present embodiment, within an RTT after an UPDATE_FULLHEADER is transmitted, an UPDATE_FULLHEADER is not transmitted again, so that it is possible to shorten the period in which data is lost at the receiving end, without reducing header compression efficiency and packet transmission efficiency.

Although a case was described with the above embodiment where the packet transmitting apparatus and packet receiving apparatus are used in a wireless communication system, the present invention is by no means limited to this, and it is equally possible to use the packet transmitting apparatus and packet receiving apparatus of according to the above embodiment in a wired communication system.

Moreover, although the above embodiment was described such that packet transmission and packet reception are performed by means of a packet transmitting apparatus and a packet receiving apparatus, the present invention is by no means limited to this, and it is equally possible to perform these packet transmission and packet receptionbymeans of software. For example, it is possible to store a program that executes the above packet transmission and packet reception in a ROM (Read Only Memory) in advance and operate this program by means of a CPU (Central Processing Unit). Likewise it is possible to store a program that executes the above packet transmission and packet reception in a computer-readable memory medium, record the program stored in the memory medium in a RAM of a computer (Random Access Memory), and operate the computer by this program. In these cases, the same functions and advantages as in the above-described embodiment can be achieved.

Moreover, it is possible to store a program that executes the above packet transmission and packet reception in a server, transmits to a client the program stored in the server upon request from the user, and implement the program on the client. In this case, the same functions and advantages as in the above-described embodiment can be achieved.

It is furthermore possible to mount the packet transmitting apparatus according to the above embodiment in an image distribution apparatus that performs image distribution. Likewise, it is possible to mount the packet receiving apparatus according to the above embodiment in a communication terminal apparatus for use in a mobile communication system. In these cases, the same functions and advantages as in the above-described embodiment can be achieved.

Although RTP, UDP, and IP are used in combination for the protocol for the above embodiment, the present invention is by no means limited to this and is applicable to packet communication that uses other protocols.

As described above, it is possible to shorten the period in which data is lost at the receiving end without reducing header compression efficiency and packet transmission efficiency.

The present application is based on Japanese Patent Application No.2000-277005 filed on September 12, 2000, entire content of which is incorporated herein by reference.

## Claims

1. A packet transmitting apparatus for use in a packet communication system in which header compression and decompression are performed using reference information, said packet transmitting apparatus comprising:
a receiver that receives a update request transmitted from a packet receiving apparatus for an update of the reference information; and
a transmitter that, upon receiving the update request, selects and transmits one of a first packet having a header that will be decompressed in the packet receiving apparatus with reference to the reference information, and a second packet having a header that will be decompressed in the packet receiving apparatus without reference to the reference information and thereafter used for the update of the reference information,
wherein, during a predetermined period after transmitting the second packet, the transmitter selects and transmits the first packet.

2. The packet transmitting apparatus according to claim 1, wherein the transmitter, after transmitting the second packet, selects and transmits the first packet until receiving an update request, said update request issued upon detection of an error in the header of the second packet by the packet receiving apparatus.

3. An image distribution apparatus having a packet transmitting apparatus,
wherein said packet transmitting apparatus is for use in a packet communication system in which header compression and decompression are performed using reference information, and comprises:
a receiver that receives a update request transmitted from a packet receiving apparatus for an update of the reference information; and
a transmitter that, upon receiving the update request, selects and transmits one of a first packet having a header that will be decompressed in the packet receiving apparatus with reference to the reference information, and a second packet having a header that will be decompressed in the packet receiving apparatus without reference to the reference information and thereafter used for the update of the reference information, and
wherein, during a predetermined period after transmitting the second packet, the transmitter selects and transmits the first packet.

4. A program that makes a computer execute:
a reception step of receiving a update request for an update of reference information used for header decompression at a communication destination; and
a transmission step of selecting and transmitting one of a first packet having a header that will be decompressed in the packet receiving apparatus with reference to the reference information, and a second packet having a header that will be decompressed in the packet receiving apparatus without reference to the reference information and thereafter used for the update of the reference information,
wherein, in the transmission step, the transmission step selects and transmits the first packet during a predetermined period after the second packet is transmitted.

5. A packet transmission method for use in a packet communication system in which header compression and decompression are performed using reference information, said packet transmission method comprising:
a packet receiving end transmitting a request for an update of the reference information upon detecting an error in a decompressed header; and
a packet transmitting end, upon receiving the request, selecting and transmitting one of a first packet having a header that will be decompressed in the packet receiving apparatus with reference to the reference information, and a second packet having a header that will be decompressed in the packet receiving apparatus without reference to the reference information and thereafter used for the update of the reference information, selecting and transmitting the first packet during a predetermined period after the second packet is transmitted.
